(19) Europäisches Patentamt / European Patent Office / Office européen des brevets

(11) EP 3 008 136 B1

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(21) Anmeldenummer: **14729336.9**

(22) Anmeldetag: **11.06.2014**

(51) Int Cl.:
**C09D 4/06** (2006.01)    **C09D 133/00** (2006.01)

(86) Internationale Anmeldenummer:
**PCT/EP2014/062085**

(87) Internationale Veröffentlichungsnummer:
**WO 2014/198750 (18.12.2014 Gazette 2014/51)**

(54) **OILING-ARME BESCHICHTETE POLYCARBONAT-FOLIEN**

LOW-OILING COATED POLYCARBONATE FILMS

FEUILLES DE POLYCARBONATE REVÊTUES À FAIBLE EFFET DE MOIRÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2013 EP 13172192**

(43) Veröffentlichungstag der Anmeldung:
**20.04.2016 Patentblatt 2016/16**

(73) Patentinhaber: **Covestro Deutschland AG 51373 Leverkusen (DE)**

(72) Erfinder:
• **KOSTROMINE, Serguei 53913 Swisttal-Buschhoven (DE)**
• **PETZOLDT, Joachim 40789 Monheim (DE)**

(74) Vertreter: **Levpat c/o Covestro AG Gebäude 4825 51365 Leverkusen (DE)**

(56) Entgegenhaltungen:
**US-A- 5 061 558    US-A1- 2009 163 614 US-A1- 2011 171 476**

**Beschreibung**

Die vorliegende Erfindung betrifft eine mit mindestens einer Polymethylmethacrylat-haltigen Schicht beschichteten Polycarbonat-Folie, deren Oberfläche verbesserte Eigenschaften hinsichtlich Kratzfestigkeit, Lösemittelbeständigkeit und Anti-Oiling-Verhalten aufweist, sowie ein Herstellungsverfahren für eine solche Folie. Des Weiteren betrifft die vorliegende Erfindung 3D-Kunststoffteile, umfassend die erfindungsgemäße Folie sowie die Verwendung der erfindungsgemäßen Folien zur Herstellung von Kunststoffteilen in film insert molding-Verfahren.

Für die Herstellung von Kunststoffteilen im Spritzgussverfahren hat sich die Film-Insert-Molding-Technologie etabliert. Sie sieht vor, dass die Frontoberfläche eines Teiles zuerst aus einer beschichteten Folie zwei- oder dreidimensional vorgefertigt wird und danach mit einer Kunststoffschmelze von der Rückseite gefüllt bzw. hinterspritzt wird.

Dabei ist es oft erwünscht, dass die Frontseite gegen chemische und mechanische Einwirkungen ausreichend geschützt ist. Dieses wird im Stand der Technik oftmals durch eine entsprechende Beschichtung oder Lackierung der Oberfläche erreicht. Um eine Nassbeschichtung der fertigen dreidimensionalen Teile zu vermeiden, ist es dabei vorteilhaft, dass eine solche Lackierung oder Beschichtung schon auf der Folie aufgebracht sein soll, welche dann mit der Folie alle weiteren Umformungsschritte durchläuft und danach endgültig ausgehärtet wird, wie beispielsweise durch UV-Belichtung.

WO 2005/080484 A1 offenbart eine strahlenhärtbare Verbundschichtplatte oder Folie aus mindestens einer Substratschicht und einer Deckschicht, die eine strahlungshärtbare Masse mit einer Glasübergangstemperatur unter 50°C mit hoher Doppelbindungsdichte enthält.

US 5,061,558 A offenbart mehrschichtige Kunststoffobjekte, die eine Kernschicht eines aromatischen Polycarbonat mit einer Polymethacrylat Schicht, die einen UV-Absorber enthält, aufweisen. Diese weisen eine sehr gute Stabilität gegenüber UV-Strahlung auf.

US 2009/0163614 A1 offenbart eine Beschichtungszusammensetzung, die ein thermoplastisches Harz umfasst, wobei das thermoplastische Harz ausgewählt ist aus der Gruppe bestehend aus Polycycloolefinharzen, Polyesterharzen, Polyacrylatharzen und deren Mischungen und einer strahlenhärtbaren Beschichtungszusammensetzung.

Daraus entsteht ein ganz spezielles Eigenschaftsprofil für beschichtete Folien, die zu dieser Technologie passen. Im Stand der Technik hat sich für diese Produktklasse der Begriff *"Formable Hardcoating"* durchgesetzt, nämlich eine Folienbeschichtung, die zuerst ausreichend blockfest ist, sich dann aber zusammen mit dem Substrat thermisch beliebig verformen lässt und am Ende durch UV-Härten die Eigenschaften einer Schutzschicht bekommt.

Eine solche Eigenschaftskombination im Sinne von Blockfestigkeit und thermoplastischem Verhalten der primären Beschichtung zusammen mit dem großen latenten Potential zur UV-Vernetzung ist schwer zu realisieren.

Die meisten Lösungsansätze für diese Aufgabenstellung im Stand der Technik umfassen den Einsatz von Makromonomeren, die hauptsächlich durch *Dual-Cure*-Verfahren hergestellt werden, wie es unter anderem beschrieben ist in Beck, Erich (BASF), Scratch resistant UV coatings for automotive applications, Pitture e Vernici, European Coatings (2006), 82(9), 10-19; Beck, Erich, Into the third dimension: three ways to apply UV coating technology to 3D-automotive objects, European Coatings Journal (2006), (4), 32, 34, 36, 38-39; Petzoldt, Joachim; Coloma, Fermin (BMS), New three-dimensionally formable hardcoat films, JOT, Journal fuer Oberflaechentechnik (2010), 50(9), 40-42; EP 2113527 A1; Petzoldt et al., Development of new generation hardcoated films for complex 3D-shaped FIM applications, RadTech Asia 2011, Conference Proceedings.

Nach dem Hinterspritzen dieser Folienprodukte mit beispielsweise Polycarbonat-Schmelze (*Film insert Molding*) entstehen die gewünschten Kunststoffteile.

An das optische Erscheinungsbild solcher Kunststoffteile, die im Auto, in jeglichen anderen Transportmitteln, Elektro- und Elektronikgeräten und in der Bauindustrie einen breiten Einsatz finden, werden hohe Anforderungen gestellt. Irreguläre Regenbogenphänomene, die oft als sogenanntes "Oiling" bezeichnet werden, stören den gewünschten optischen Eindruck. Besonders schwer fällt dieser unerwünschte Effekt ins Auge, wenn Kunststoffteile in glänzendem Piano-Schwarz dargestellt werden sollen.

Der "Oiling"-Effekt entsteht durch Interferenz zweier in eine Richtung reflektierten Lichtstrahlen, wobei ein Strahl an der Grenzfläche Luft-Beschichtung reflektiert wird, während der andere Strahl an der darunter liegenden Grenzfläche Beschichtung-Substratfolie reflektiert wird. Je mehr Licht von beiden Flächen reflektiert wird, desto sichtbarer kann der Effekt werden. Glänzende Lackierungen glänzender Substrate sind eine Voraussetzung für starkes Oiling. Genau dieser Fall tritt ein, wenn beispielsweise eine glatte Polycarbonatfolie mit einem glänzendem Klarlack überdeckt wird.

In einer solchen Anwendung werden oft glatte Polycarbonat-Folien mit einem Brechungsindex von ca. 1,58 verwendet, welche in der Regel mit einem Aliphaten-basierten Lack in einer anwendungsrelevanten Schichtstärke zwischen 5 und 20 µm beschichtet werden. Durch thermische Verformung wird die Schichtdicke der Beschichtung auch ortsabhängig auf dem Bauteil variiert, was insgesamt die Ausbildung eines Regenbogeneffekts auf dem Bauteil begünstigen kann.

Insgesamt besteht damit ein erhöhter Bedarf an Polycarbonat-Folien mit einer oiling-armen Oberfläche, die darüber hinaus noch vor und nach einem Verformungsprozess ausreichend blockfest ist sowie nach dem Härten durch beispielsweise UV-Licht eine gewisse Kratzfestigkeit und Lösemittelbeständigkeit aufweist. Das Erfüllen eines solchen Anforderungsprofils mit der erwähnten Kombination von Eigenschaften stellt eine besondere Herausforderung an den Fachmann dar.

Es wurde überraschenderweise festgestellt, dass thermisch verformbare und danach UV-härtbare beschichteten Polycarbonatfolien mit besonderer Kratz- und Lösemittelbeständigkeit in besonders effizienter Weise auch "oiling"-arm realisiert werden können, wenn das Polycarbonatsubstrat mit mindestens einer Polymethylmethacrylat-haltigen Schicht überdeckt wird, wobei die gesamte Stärke der Schicht oder von den Schichten zusammen mindestens 10 $\mu$m beträgt und diese Schicht oder jede von diesen Schichten mindestens 40 Gew.-% Polymethylmethacrylat beinhalten und ein Beschichtungsmittel für die gesamte Schicht oder für die oberste Schicht der PMMA-haltigen Beschichtung mindestens ein Polymethylmethacrylat-Polymer oder Polymethylmethacrylat-Copolymer mit einer gewichtsmittleren Molmasse von mindestens 100.000 g/mol, mindestens einen UV-härtbaren Reaktivverdünner, mindestens einem Fotoinitiator und mindestens ein Lösemittel enthält.

Die vorliegende Erfindung stellt daher folgendes bereit: Eine beschichtete Polycarbonat-Folie, umfassend eine Polycarbonatfolie und darauf mindestens eine Polymethylmethacrylat-haltige Schicht mit einem Polymethylmethacrylat-Anteil von mindestens 40 Gew.-%, dadurch gekennzeichnet, dass

die gesamte Schichtdicke der mindestens einen Polymethylmethacrylat-haltigen Schicht mindestens 10 $\mu$m beträgt,

die oberste Schicht der mindestens einen Polymethylmethacrylat-haltigen Schicht erhältlich ist durch Beschichtung mit einem Beschichtungsmittel, umfassend

(a) mindestens ein Polymethylmethacrylat-Polymer oder Polymethylmethacrylat-Copolymer mit einem mittleren Molgewicht Mw von mindestens 100.000 g/mol in einem Gehalt von mindestens 40 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel,

wobei der Anteil an ethylenisch ungesättigten Gruppen mindestens 3 mol pro kg des Festanteils des Beschichtungsmittels beträgt.

Die PMMA-haltige Beschichtung kann also homogen sein und einschichtig aufgetragen sein. Sie kann auch aus mehreren PMMA-haltigen Schichten bestehen, die nacheinander aufgetragen wurden. Wie oben beschrieben wurde, können die PMMA-haltigen Schichten der mindestens einen PMMA-haltigen Schicht unterschiedliche Zusammensetzungen haben. Die Voraussetzungen dafür umfassen den Mindestanteil des PMMAs von 40 Gew.-% für jede Schicht, die besondere Zusammensetzung des Beschichtungsmittels für die oberste Schicht und die gesamte Schichtstärke PMMA-haltigen Schichten der mindestens einen PMMA-haltigen Schicht von mindestens 10 $\mu$m. Wenn nur eine PMMA-haltige Schicht vorgesehen ist, dann besteht die PMMA-Schicht mit einer Schichtdicke von mindestens 10 $\mu$m aus einer Beschichtung, die durch Beschichten mit dem erfindungsgemäßen Beschichtungsmittel erhältlich ist.

Die beschichtete Polycarbonatfolie gemäß der vorliegenden Erfindung besteht daher in der einfachsten Ausführungsform aus einer Polycarbonatfolie und einer Beschichtung, die durch Beschichten der Folie mit dem Beschichtungsmittel gemäß der Erfindung erhalten wurde. Auf diese Weise lässt sich hocheffizient zu einer erfindungsgemäßen Polycarbonatfolie mit einer oiling-armen, kratzfesten und lösemittelbeständigen Oberfläche gelangen.

Ebenso vorteilhaft ist eine insgesamt mindestens 10 $\mu$m starke zweischichtige Überdeckung des Polycarbonatsubstrats, wobei die untere Schicht, die unmittelbar an das Polycarbonat angrenzt, aus reinem Polymethylmethacrylat besteht und die obere Schicht aus dem erfindungsgemäßen Beschichtungsmittel erhältlich ist. Somit umfasst die erfindungsgemäße beschichtete Polycarbonatfolie in dieser bevorzugten Ausführungsform zwei Polymethylmethacrylat-haltige Schichten. In einer bevorzugten Ausgestaltung davon umfasst die erfindungsgemäße Folie eine durch Coextrusion erhältliche Polycarbonat/Polymethylmethacrylat-Folie und eine durch Beschichten mit dem Beschichtungsmittel gemäß der vorliegenden Erfindung erhältliche Beschichtung auf der Polymethylmethyacrylat-Schicht der Folie.

Polycarbonat/Polymethylmethacrylat co-extrudierten Folien mit unterschiedlich starker Polymethylmethacrylat-Schicht sind im Stand der Technik bekannt und vielfältig kommerziell erhältlich, wie beispielsweise von der Bayer Materialscience AG unter den Handelsnamen Makrofol® SR 253, Makrofol® SR 906, Makrofol® SR 280. Folien dieser Art können zur Herstellung der erfindungsgemäßen Folien dienen, indem sie derart mit auf der Polymethylmethacrylat-Seite mit dem erfindungsgemäßen Beschichtungsmittel beschichtet werden, dass die PMMA-haltige Gesamtschichtdicke mindestens 10 $\mu$m beträgt.

3

Viele der erwähnten, im Stand der Technik und im Handel erhältlichen coextrudierten PC/PMMA-Folien weisen schon eine PMMA-Schicht mit einer Dicke von mehr als 10 $\mu$m auf. Auf solchen Substraten führt sogar eine sehr dünne erfindungsgemäße Beschichtung wie beispielsweise in einer Dicke von 5 $\mu$m zu keinem nennenswerten Oiling, weil die Brechungsindices von PMMA und der erfindungsgemäßen Beschichtung, die größtenteils auch aus PMMA besteht, sehr dicht beieinander liegen. Dieses neu entstehende Interface bringt keine Verstärkung des unerwünschten Regenbogen-Phänomens.

Die Anzahl der gesamten PMMA-haltigen Schichten ist somit mindestens 1 und kann insgesamt 1, 2, 3 oder 4 betragen. Dabei beträgt die erfindungsgemäße Schichtdicke der PMMA-haltigen Schichten mindestens 10 $\mu$m. Je nach Anzahl und Dicke der PMMA-haltigen Schichten kann die durch Beschichten mit dem erfindungsgemäßen Beschichtungsmittel erhältliche oberste PMMA-haltige Schicht mindestens 2 $\mu$m, bevorzugt mindestens 5 $\mu$m und besonders bevorzugt mindestens 10 $\mu$m dick sein. Die Dicke der oben erwähnten coextrudierten PMMA-Schicht einer coextrudierten PC/PMMA-Folie kann mindestens 10 $\mu$m, bevorzugt mindestens 15 $\mu$m und besonders bevorzugt mindestens 20 $\mu$m betragen. So kann die Dicke der PMMA-Schicht einer coextrudierten PC/PMMA-Folie mindestens 10 $\mu$m und die Dicke der aus dem erfindungsgemäßen Beschichtungsmittel erhältlichen Schicht darauf mindestens 5 $\mu$m betragen.

Das erfindungsgemäße Beschichtungsmittel kann einfach und effizient erhalten werden. Darüber hinaus sind damit erhältliche Beschichtungen auf vielen Oberflächen wie insbesondere für die im Film insert molding-Verfahren in Frage kommenden Folien ausreichend blockfest, lassen sich dann aber zusammen mit dem beschichteten Substrat thermisch beliebig verformen und bekommen nach Härtung wie beispielsweise durch UV-Strahlung eine Oberfläche mit vorteilhaften Eigenschaften hinsichtlich Kratzfestigkeit, Lösemittelbeständigkeit sowie eines zumindest verringerten Oiling-Effektes.

Die Bestimmung der Kratzfestigkeit lässt sich beispielsweise anhand der Bleistifthärte bestimmen, wie sie in Anlehnung an ASTM D 3363 gemessen werden kann. Eine Bewertung der Lösemittelbeständigkeit kann in Anlehnung an EN ISO 2812-3:2007 erfolgen. Bemerkenswert ist, dass die durch das erfindungsgemäße Beschichten der Folie mit dem Beschichtungsmittel und abschließendem Härten durch UV-Strahlung erhaltene Oberfläche des Formkörpers selbst gegenüber dem sonst für Polycarbonat-Oberflächen sehr schädlichen Lösungsmittel Aceton eine gute Beständigkeit aufweist.

Als Maß für den das oiling definierenden Regenbogeneffekt dient die aus Reflektionsspektren ermittelte Zahl der Newton-Ringe. Sie wird aus der maximalen Amplitude im Reflektionsspektrum zwischen 400 nm und 650 nm errechnet. Reflektion (R) und maximale Amplitude (MA) werden aus dem Spektrum in Prozent entnommen. Um die Einheit zu eliminieren wird MA durch R bei derselben Wellenlänge dividiert. Um Nachkommastellen zu vermeiden, wird der ermittelte Wert mit 1000 multipliziert. Die so ermittelten Werte liegen bei erfindungsgemäßen Beschichtungen unter 20, während Vergleichsfolien mit offensichtlichem Oiling Werte ab 30 und auch weit darüber zeigen.

Das Beschichtungsmittel gemäß der vorliegenden Erfindung umfasst

(a) mindestens ein Polymethylmethacrylat-Polymer oder Polymethylmethacrylat-Copolymer mit einem mittleren Molgewicht Mw von mindestens 100.000 g/mol in einem Gehalt von mindestens 40 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von $\geq$ 0,1 bis $\leq$ 10 Gewichtsteilen des Festanteils des Beschichtungsmittels; und
(d) mindestens ein organisches Lösungsmittel,

wobei der Anteil an ethylenisch ungesättigten Gruppen mindestens 3 mol pro kg des Festanteils des Beschichtungsmittels beträgt.

Unter Polymethylmethacrylat (PMMA) versteht man Polymethylmethacrylat-Homopolymere und Copolymere auf Methylmethacrylat-Basis, vorzugsweise mit einem Methylmethacrylat-Anteil von mehr als 70 Gew.-%. Solche PMMA-Polymere und PMMA-Copolymere sind beispielsweise unter den Handelsnamen *Degalan®, Degacryl®, Plexyglas®, Acrylite®* (Hersteller Evonik), *Altuglas, Oroglas* (Hersteller Arkema), *Elvacite®, Colacryl®, Lucite®* (Hersteller Lucite) bekannt und im Handel erhältlich.

Bevorzugt sind PMMA-Homopolymere sowie Copolymere aus 70 Gew.-% bis 99,5 Gew.-% Methylmethacrylat und 0,5 Gew.-% bis 30 Gew.-% Methylacrylat, besonders bevorzugt aus 90 Gew.-% bis 99,5 Gew.-% Methylmethacrylat und 0,5 Gew.-% bis 10 Gew.-% Methylacrylat. Die Vicaterweichungstemperaturen VET gemäß ISO 306 betragen bevorzugt mindestens 95°C, und liegen besonders bevorzugt im Bereich von 100 °C bis 115 °C.

Das mittlere Molekulargewicht Mw der erfindungsgemäß im Beschichtungsmittel einzusetzenden PMMA-Homopolymere und Copolymere beträgt mindestens 100.000 g/mol, bevorzugt mindestens 150.000 g/mol und besonders bevorzugt mindestens 200.000 g/mol.

Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Das PMMA-Homopolymer oder -Copolymer ist ein wesentlicher Teil des erfindungsgemäßen Beschichtungsmittels und der erfindungsgemäßen Beschichtung. Der Anteil des PMMA-Homopolymers oder -Copolymers beträgt im Festanteil des Beschichtungsmittels mindestens 40 Gew.-%, bevorzugt mindestens 45 Gew.-% und besonders bevorzugt mindestens 50 Gew.-%.

Als Komponente (b) des erfindungsgemäßen Beschichtungsmittel sind als Reaktivverdünner bifunktionelle, trifunktionelle, tetrafunktionelle, pentafunktionelle oder hexafunktionelle Acryl- und/oder Methacrylmonomere bevorzugt einsetzbar. Vorzugsweise handelt es sich um Esterfunktionen, insbesondere Acrylesterfunktionen. Geeignete mehrfunktionelle Acryl- und/oder Methacrylsäureester leiten sich von aliphatischen Polyhydroxyverbindungen mit wenigstens 2, vorzugsweise wenigstens 3 und besonders bevorzugt wenigstens 4 Hydroxygruppen und vorzugsweise 2 bis 12 Kohlenstoffatomen ab.

Beispiele solcher aliphatischen Polyhydroxyverbindungen sind Ethylenglykol, Propylenglykol, Butandiol-1,4, Hexandiol-1,6, Diethylenglykol, Triethylenglykol, Glycerin, Trimethylolpropan, Pentaerythrit, Dipentaerythrit, Tetramethylolethan und Sorbitan. Beispiele für sich als bi- bis hexafunktionelle Acryl- und/oder Methacrylmonomere zum Reaktivverdünner erfindungsgemäß bevorzugt eignende Ester der genannten Polyhydroxyverbindungen sind Glykoldiacrylat und - dimethacrylat, Butandioldiacrylat oder -dimethacrylat, Dimethylolpropandiacrylat oder - dimethacrylat, Diethylenglykoldiacrylat oder -dimethacrylat, Divinylbenzol, Trimethylolpropantriacrylat oder -trimethacrylat, Glycerintriacrylat oder -trimethacrylat, Pentaerythrittetraacrylat oder -tetramethacrylat, Dipentaerythritpenta/hexaacrylat (DPHA), 1,2,3,4-Butantetraoltetraacrylat oder - tetramethacrylat, Tetramethylolethantetraacrylat oder -tetramethacrylat, 2,2-Dihydroxy-propandiol-1,3-tetraacrylat oder -tetramethacrylat, Diurethandimethacrylat (UDMA), Sorbitan-tetra-, -penta- oder -hexaacrylat oder die entsprechenden Methacrylate. Es können auch Gemische von vernetzenden Monomeren mit zwei bis vier oder mehr ethylenisch ungesättigten, radikalisch polymerisierbaren Gruppen mitverwendet werden.

Weiter erfindungsgemäß als Reaktivverdünner bzw. als Komponente b) des erfindungsgemäßen Beschichtungsmittels können alkoxylierte Di-, Tri-,Tetra-, Penta- und Hexacrylate oder - methacrylate verwendet werden. Beispiele für alkoxylierte Diacrylate oder -methacrylate sind alkoxyliertes, bevorzugt ethoxyliertes Methandioldiacrylat, Methandioldimethacrylat, Glycerindiacrylat, Glycerindimethacrylat, Neopentylglycoldiacrylat, Neopentylglycoldimethacrylat, 2-Butyl-2-Ethyl-1,3-Propandioldiacrylate, 2-Butyl-2-Ethyl-1,3-Propandioldimethacrylat, Trimethylolpropandiacrylat oder Trimethylolpropandimethacrylat. Beispiele für alkoxylierte Triacrylate oder -methacrylate sind alkoxyliertes, bevorzugt ethoxyliertes Pentaerythrittriacrylat, Pentaerythrittrimethacrylat, Glycerintriacrylat, Glycerintrimethacrylat, 1,2,4-Butantrioltriacrylat, 1,2,4-Butantrioltrimethacrylat, Trimethylolpropantriacrylat, Trimethylolpropantrimethacrylat, Tricyclodecandimethanoldiacrylat, Tricyclodecandimethanoldimethacrylat, Ditrimethylolpropantetraacrylat oder Ditrimethylolpropantetramethacrylat.

Beispiele für alkoxylierte Tetra-, Penta- oder Hexaacrylate sind alkoxyliertes, bevorzugt ethoxyliertes Pentaerythrittetraacrylat, Dipentaerythrittetraacrylat, Dipentaerythritpentaacrylat Dipentaerythrithexaacrylat, Pentaerythrittetramethacrylat, Dipentaerythrittetramethacrylat, Dipentaerythritpentamethacrylat oder Dipentaerythrithexamethacrylat.

In den alkoxylierten Diacrylaten oder -methacrylaten, Triacrylaten oder -methacrylaten, Tetraacrylaten oder -methacrylaten, Pentaacrylaten oder -methacrylaten und/oder alkoxylierten Hexaacrylaten oder -methacrylaten der Komponente b) können alle Acrylatgruppen oder Methacrylatgruppen oder nur ein Teil der Acrylatgruppen oder Methacrylatgruppen im jeweiligen Monomer über Alkylenoxidgruppen an den entsprechenden Rest gebunden sein. Es können auch beliebige Mischungen solcher ganz oder teilweise alkoxylierten Di-, Tri-, Tetra-, Penta- oder Hexaacrylate bzw. -methacrylate eingesetzt werden. Dabei ist es auch möglich, das die Acrylat- oder Methacrylatgruppe(n) über mehrere aufeinanderfolgende Alkylenoxidgruppen, vorzugsweise Ethylenoxidgruppen an den aliphatischen, cycloaliphatischen oder aromatischen Rest des Monomeren gebunden sind. Die mittlere Anzahl der Alkylenoxid- bzw Ethylenoxidgruppen im Monomer wird durch den Alkoxylierungsgrad bzw. Ethoxylierungsgrad angegeben. Der Alkoxylierungsgrad bzw. Ethoxylierungsgrad kann bevorzugt von 2 bis 25 betragen, besonders bevorzugt sind Alkoxylierungsgrade bzw. Ethoxylierungsgrade von 2 bis 15, ganz besonders bevorzugt von 3 bis 9.

Ebenso erfindungsgemäß als Reaktivverdünner bzw. als Komponente b) des erfindungsgemäßen Beschichtungsmittels können Oligomere dienen, die zur Klasse der aliphatischen Urethanacrylate beziehungsweise der Polyesteracrylate oder Polyacrylacrylate gehören. Deren Verwendung als Lackbindemittel ist bekannt und ist in Chemistry & Technology of UV & EB Formulation for Coatings, Inks & Paints, Vol. 2, 1991, SITA Technology, London (P.K.T: Oldring (Ed.) auf S.73-123 (Urethane Acrylates) bzw. S.123-135 (Polyester Acrylates) beschrieben. Kommerziell erhältlich und geeignet im erfindungsgemäßen Sinne sind hier beispielsweise aliphatische Urethanacrylate wie Ebecryl® 4858, Ebecryl® 284, Ebecryl® 265, Ebecryl® 264, Ebecryl® 8465, Ebecryl® 8402 (Hersteller jeweils Cytec Surface Specialities), Craynor® 925 von Cray Valley, Viaktin® 6160 von Vianova Resin, Desmolux VP LS 2265 von Bayer MaterialScience AG, Photomer 6891 von Cognis oder auch in Reaktivverdünnern gelöste aliphatische Urethanacrylate wie Laromer® 8987 (70%ig in Hexandioldiacrylat) von BASF AG, Desmolux U 680 H (80%ig in Hexandioldiacrylat) von Bayer MaterialScience AG, Craynor® 945B85 (85% in Hexandioldiacrylat) , Ebecryl® 294/25HD (75% in Hexandioldiacrylat), Ebecryl® 8405 (80% in Hexandioldiacrylat), Ebecryl® 4820 (65% in Hexandioldiacrylat) (Hersteller jeweils Cytec Surface Specialities) und Craynor® 963B80 (80% in Hexandioldiacrylat) jeweils von Cray Valley oder auch Polyesteracrylate wie Ebecryl® 810, 830 oder Polyacrylacrylate wie Ebecryl®, 740, 745, 767 oder 1200 von Cytec Surface Specialities.

In einer weiteren bevorzugten Ausführungsform umfasst der Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaacrylate und/oder Pentamethacrylate, alkoxylierte Hexaacrylate und/oder Hexamethacrylate, aliphatische Urethanacrylate, Polyesteracrylate, Polyacrylacrylate und Gemische davon.

In einer weiteren bevorzugten Ausführungsform umfasst der Reaktivverdünner (b) des erfindungsgemäßen Beschichtungsmittels Dipentaerythritolpenta/hexaacrylat.

Auch erfindungsgemäß sind Gemische der oben genannten vernetzenden multifunktionellen Monomere mit monofunktionellen Monomeren wie insbesondere Methylmethacrylat. Der Anteil der multifunktionellen Monomere in einem solchen Gemisch beträgt bevorzugt mindestens 20 Gew.-%.

Der Reaktivverdünner ist ein wesentlicher Teil des erfindungsgemäßen Beschichtungsmittels und der erfindungsgemäßen Beschichtung. Der Anteil des mindestens einen Reaktivverdünners insgesamt beträgt im Festanteil des Beschichtungsmittels mindestens 30 Gew.-%, bevorzugt mindestens 40 Gew.-%, besonders bevorzugt mindestens 45 Gew.-%.

Der Gehalt an ethylenisch ungesättigten Gruppen hat wesentlichen Einfluss auf die erreichbaren Beständigkeitseigenschaften der mit Strahlung gehärteten Beschichtung. Daher enthält das erfindungsgemäße Beschichtungsmittel einen Gehalt an ethylenisch ungesättigten Gruppen von mindestens 3,0 mol pro kg Festgehalt des Beschichtungsmittels, bevorzugt mindestens 3,5 mol pro kg, besonders bevorzugt mindestens 4,0 mol pro kg Festgehalt des Beschichtungsmittels. Dieser Gehalt an ethylenisch ungesättigten Gruppen ist dem Fachmann auch unter dem Begriff der Doppelbindungsdichte wohlbekannt.

Der Begriff des mindestens einen Fotoinitiators des erfindungsgemäßen Beschichtungsmittel umfasst die gängigen dem Fachmann bekannten, kommerziell erhältlichen Verbindungen wie z. B. $\alpha$-Hydroxyketone, Benzophenon, $\alpha,\alpha$-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere, wobei die genannten Photoinitiatoren allein oder in Kombination von zwei oder mehreren oder in Kombination mit einem der obigen Polymerisationsinitiatoren benutzt werden können.

Als UV-Fotoinitiatoren können beispielsweise die IRGACURE®-Typen von BASF eingesetzt werden, so beispielsweise die Typen IRGACURE® 184, IRGACURE® 500, IRGACURE® 1173, IRGACURE®2959, IRGACURE® 745, IRGACURE® 651, IRGACURE® 369, IRGACURE® 907, IRGACURE® 1000, IRGACURE® 1300, IRGACURE® 819, IRGACURE® 819DW, IRGACURE® 2022, IRGACURE® 2100, IRGACURE® 784, IRGACURE® 250, ferner können die DAROCUR®-Typen von BASF eingesetzt werden, so beispielsweise die Typen DAROCUR® MBF, DAROCUR® 1173, DAROCUR® TPO, DAROCUR® 4265. Ein anderes Beispiel eines im erfindungsgemäßen Beschichtungsmittel einsetzbaren UV-Photoinitiators ist unter dem Handelsnamen Esacure One von dem Hersteller Lamberti zu beziehen.

Fotoinitiatoren sind mit im Bereich von ≥ 0,1 bis ≤ 10 Gewichtsteilen des Feststoffgehaltes des Beschichtungsmittels im Beschichtungsmittel enthalten.

Das Beschichtungsmittel soll zudem über die 100 Gew.-Teile der Komponenten (a), (b) und (c) hinaus ein oder mehrere organische Lösungsmittel enthalten.

Als Lösungsmittel sind dabei besonders diejenigen geeignet, die Polycarbonat-Polymere nicht angreifen. Solche Lösungsmittel sind bevorzugt Alkohole. In einer bevorzugten Ausführungsform der vorliegenden Erfindung ist das Lösungsmittel (d) ausgewählt aus 1-Methoxy-2-propanol, Diacetonalkohol, 2,2,3,3-Tetrafluoropropanol und Gemischen davon. Ganz besonders bevorzugt ist 1-Methoxy-2-propanol.

Die Lackzusammensetzung enthält somit bevorzugt zusätzlich zu den 100 Gew.-Teilen der Komponenten (a), (b) und (c) 0 bis 900 Gew.-Teile, besonders bevorzugt 100 bis 850 Gew.-Teile, ganz besonders bevorzugt 200 bis 800 Gew.-Teile des wenigstens einen organischen Lösungsmittels.

Das Beschichtungsmittel kann zudem über die 100 Gew.-Teile der Komponenten (a), (b) und (c) hinaus optional ein oder mehrere weitere Lackadditive enthalten. Solche Lackadditive können beispielsweise ausgewählt sein aus der Gruppe enthaltend Stabilisatoren, Verlaufsmittel, Oberflächenadditive, Pigmente, Farbstoffe, anorganische Nanopartikel, Haftvermittler, UV-Absorber, IR-Absorber, bevorzugt aus der Gruppe enthaltend Stabilisatoren, Verlaufsmittel, Oberflächenadditive und anorganische Nanopartikel. Die Lackzusammensetzung enthält bevorzugt zusätzlich zu den 100 Gew.-Teilen der Komponenten (a), (b) und (c) 0 bis 40 Gew.-Teile, besonders bevorzugt 0 bis 30 Gew.-Teile, ganz besonders bevorzugt 0,1 bis 20 Gew.-Teile wenigstens eines weiteren Lackadditivs. Bevorzugt beträgt der Gesamtanteil aller in der Lackzusammensetzung enthaltenen Lackadditive 0 bis 40 Gew.-Teile, besonders bevorzugt 0 bis 30 Gew.-Teile, ganz besonders bevorzugt 0,1 bis 20 Gew.-Teile.

Die Lackzusammensetzung kann anorganische Nanopartikel zur Erhöhung der mechanischen Beständigkeit, wie beispielsweise der Kratzfestigkeit und/oder Bleistifthärte enthalten.

Als Nanopartikel kommen anorganische Oxide, Mischoxide, Hydroxide, Sulfate, Carbonate, Carbide, Boride und Nitride von Elementen der II bis IV Hauptgruppe und/oder Elementen der I bis VIII Nebengruppe des Periodensystems einschließlich der Lanthanide in Frage. Bevorzugte Nanopartikel sind Siliziumoxid-, Aluminiumoxid-, Ceroxid-, Zirkonoxid-, Nioboxid-, Zinkoxid- oder Titanoxid-Nanopartikel, besonders bevorzugt sind Siliziumoxid-Nanopartikel.

Die eingesetzten Partikel weisen vorzugsweise mittlere Partikelgrößen (gemessen mittels dynamischer Lichtstreuung in Dispersion bestimmt als Z-Mittelwert) kleiner 200 nm, bevorzugt von 5 bis 100 nm, besonders bevorzugt 5 bis 50 nm auf. Bevorzugt weisen wenigstens 75%, besonders bevorzugt wenigstens 90 %, ganz besonders bevorzugt wenigstens 95% aller eingesetzten Nanopartikel die vorstehend definierten Größen auf.

Das Beschichtungsmittel kann auf einfache Weise hergestellt werden, indem das Polymer in dem Lösemittel bei Raumtemperatur oder bei erhöhten Temperaturen vorerst komplett gelöst wird und dann der bis Raumtemperatur abgekühlten Lösung die anderen obligatorischen und gegebenenfalls die optionalen Komponenten entweder in Abwesenheit von Lösungsmittel(n) zusammen gegeben und durch Rühren miteinander vermischt werden oder in Anwesenheit von Lösungsmittel(n) beispielsweise in das oder die Lösungsmittel gegeben und durch Rühren miteinander vermischt werden. Bevorzugt wird zuerst der Fotoinitiator in dem oder den Lösungsmitteln gelöst und anschließend die weiteren Komponenten hinzugegeben. Gegebenenfalls erfolgt anschließend noch eine Reinigung mittels Filtration, vorzugsweise mittels Feinfiltration.

Aufgrund der hervorragenden Schlagzähigkeit bei gleichzeitiger Transparenz kann Polycarbonat im Rahmen der vorliegenden Erfindung auch als thermoplastisches Polymer zum Hinterspritzen bzw. Füllen der 3D-geformten und mit der Schutzschicht beschichteten Folie in einem film insert molding-Verfahren zur Herstellung eines 3D-Formkörpers bzw. Kunststoffteils eingesetzt werden. In einer ebenfalls besonders bevorzugten Ausführungsform der vorliegenden Erfindung umfasst das thermoplastische Polymer damit Polycarbonat. Für die Erfindung geeignete Polycarbonate und Polycarbonat-Zubereitungen sowie Polycarbonat-Folien sind beispielsweise unter den Handelsnamen Makrolon®, Bayblend® und Makroblend® (Bayer MaterialScience) erhältlich.

Geeignete Polycarbonate für die Herstellung der erfindungsgemäßen Polycarbonatzusammensetzungen sind alle bekannten Polycarbonate. Dies sind Homopolycarbonate, Copolycarbonate und thermoplastische Polyestercarbonate. Die geeigneten Polycarbonate haben bevorzugt mittlere Molekulargewichte $\overline{M}_w$ von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden. Zum Phasengrenzflächenverfahren sei beispielhaft auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen. Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate können aus Reaktionen von Bisphenolverbindungen mit Kohlensäureverbindungen, insbesondere Phosgen oder beim Schmelzeumesterungsprozess Diphenylcarbonat bzw. Dimethylcarbonat, erhalten werden. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt. Weitere Bisphenolverbindungen, die sich für die Polycarbonatsynthese einsetzen lassen, sind unter anderem offenbart in WO-A 2008037364, EP-A 1 582 549, WO-A 2002026862, WO-A 2005113639

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009, DE-A 25 00 092, DE-A 42 40 313, DE-A 19 943 642, US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A 1 506 249 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Kunststoffzusammensetzung(en) der Folie bzw. des thermoplastischen Polymers des 3D-Formkörpers können zusätzlich Additive, wie beispielsweise UV-Absorber, IR-Absorber sowie andere übliche Verarbeitungshilfsmittel, insbesondere Entformungsmittel und Fließmittel, sowie die üblichen Stabilisatoren, insbesondere Thermostabilisatoren sowie Antistatika, Pigmente, Farbmittel und optische Aufheller enthalten. In jeder Schicht können dabei unterschiedliche Additive bzw. Konzentrationen von Additiven vorhanden sein.

Ein weiterer Gegenstand der vorliegenden Erfindung ist ein Verfahren zur Herstellung der beschichteten Polycarbonatfolie, umfassend die Schritte

(i) Beschichten einer Polycarbonatfolie oder einer coextrudierten Polycarbonat/Polymethylmethacrylatfolie mit einem Beschichtungsmittel, umfassend

(a) mindestens ein Polymethylmethacrylat-Polymer oder Polymethylmethacrylat-Copolymer mit einem mittleren Molgewicht Mw von mindestens 100.000 g/mol in einem Gehalt von mindestens 40 Gew.-% des Festanteils des Beschichtungsmittels;

(b) mindestens einen UV-härtbaren Reaktivverdünner in einem Gehalt von mindestens 30 Gew.-% des Festanteils des Beschichtungsmittels;

(c) mindestens einen Fotoinitiator in einem Gehalt von 0,1 bis 10 Gewichtsteilen des Festanteils des Beschichtungsmittels; und

(d) mindestens ein organisches Lösungsmittel,

wobei der Anteil an ethylenisch ungesättigten Gruppen mindestens 3 mol pro kg des Festanteils des Beschichtungsmittels beträgt.

(ii) Trocknen der Beschichtung;

(iii) gegebenenfalls zurechtschneiden, dekaschieren, bedrucken und/oder thermisches oder mechanisches Verformen der Folie;

(iv) Bestrahlen der Beschichtung mit UV-Strahlung, dabei Härten der Beschichtung, wobei die Dicke der mindestens einen PMMA-haltigen Schicht nach dem Trocknungsschritt mindestens 10 $\mu$m beträgt.

Dabei sind das Beschichtungsmittel mit seinen Bestandteilen und die Begriffe der Folien dieselben, die schon im Rahmen der vorliegenden Erfindung erläutert worden sind, auch in Kombination miteinander.

Das Beschichten der Folie mit dem Beschichtungsmittel kann dabei nach den gängigen Verfahren der Beschichtung von Folien mit flüssigen Beschichtungsmitteln erfolgen, wie beispielsweise durch Rakeln, Spritzen, Gießen, Fluten, Tauchen, Sprühen, Aufwalzen oder Aufschleudern. Das Flutverfahren kann manuell mit Schlauch oder geeignetem Beschichtungskopf oder automatisch im Durchlauf über Flutlackierroboter- und gegebenenfalls Schlitzdüsen erfolgen. Bevorzugt wird eine Auftragung des Beschichtungsmittels über eine Übertragung Rolle auf Rolle. Die Oberfläche der zu beschichtenden Folie kann dabei durch Reinigung oder Aktivierung vorbehandelt sein.

Das Trocknen schließt sich an die Applikation des Beschichtungsmittels auf die Folie an. Hierzu wird insbesondere mit erhöhten Temperaturen in Öfen und mit bewegter und gegebenenfalls auch entfeuchteter Luft wie beispielsweise in Konvektionsöfen oder mittels Düsentrocknern sowie Wärmestrahlung wie IR und/oder NIR gearbeitet. Weiterhin können Mikrowellen zum Einsatz kommen. Es ist möglich und vorteilhaft, mehrere dieser Trocknungsverfahren zu kombinieren. Das Trocknen der Beschichtung im Schritt (ii) umfasst bevorzugt das Ablüften bei Raumtemperatur und/oder erhöhter Temperatur, wie vorzugsweise bei 20 - 200 °C, besonders bevorzugt bei 40 - 120 °C. Nach dem Trocknen der Beschichtung ist diese blockfest, so dass das beschichtete Substrat, insbesondere die beschichtete Folie kaschiert, bedruckt, und/oder thermisch verformt werden kann. Insbesondere das Verformen ist dabei bevorzugt, da hier schon durch das Verformen einer beschichteten Folie die Form für ein film insert molding-Verfahren zur Herstellung eines dreidimensionalen Kunststoffteils vorgegeben werden kann.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen. Besonders bevorzugt ist dabei das thermische Verformen der beschichteten Folie zu einer dreidimensionalen Form, wie sie vorbereitend auf ein Hinterspritzen der Folie mit einem thermoplastischen Polymer wie Polycarbonat in einem film insert molding-Verfahren vorgenommen wird. In einer bevorzugten Ausführungsform umfasst der Schritt (iii) das Zuschneiden und thermische Verformen der beschichteten Folie.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von $\geq 200$ nm bis $\leq 750$ nm, oder durch Bestrahlen mit energiereichen Elektronen (Elektronenstrahlung, zum Beispiel von $\geq 90$ keV bis $\leq 300$ keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Excimerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von $\geq 80$ mJ/cm$^2$ bis $\leq 5000$ mJ/cm$^2$.

In einer bevorzugten Ausführungsform ist die aktinische Strahlung daher Licht im Bereich des UV-Lichtes.

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglichst wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von $\geq 0,1$ Gewichts-% bis $\leq 10$ Gewichts-%, besonders bevorzugt von $\geq 0,2$ Gewichts-% bis $\leq 3,0$ Gewichts-% bezogen auf den Festkörper der Beschichtung eingesetzt. Zur Härtung dieser Beschichtungen wird bevorzugt eine Dosis von $\geq 80$ mJ/cm$^2$ bis $\leq 5000$ mJ/cm$^2$ eingesetzt.

Ein Hinterspritzen der beschichteten Folie mit einem thermoplastischem Polymer wie Polycarbonat nach erfolgter Härtung der Folienbeschichtung und der optionalen, meist gewünschten Umformung der beschichteten Folie ist dem Fachmann durch das film insert molding-Verfahren, wie es beispielsweise in WO 2004/082926 A1 und WO 02/07947 A1 beschrieben ist, wohlbekannt. In einer bevorzugten Ausführungsform des erfindungsgemäßen Verfahrens erfolgt das Hinterschichten der Folie in einem Schritt (v) mittels Extrusion oder Spritzguss, vorzugsweise mit Polycarbonatschmelze. Die Verfahren der Extrusion und des Spritzgusses hierzu sind dem Fachmann wohlbekannt und beispielsweise im "Handbuch Spritzgießen", Friedrich Johannnaber/Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

Nach dem Härten durch Bestrahlung mit UV-Licht weist die beschichtete Oberfläche der auf diese Weise hergestellten beschichteten Polycarbonatfolie dann die erfindungsgemäße Eigenschaftskombination hinsichtlich Kratzfestigkeit, Lösemittelbeständigkeit und des verringerten oiling-Effektes auf.

Aufgrund der vorteilhaften Eigenschaftskombination aus Kratzfestigkeit, Lösemittelbeständigkeit und des verringerten oiling-Effektes der Oberflächen der erfindungsgemäßen Polycarbonatfolien eignen sich diese Folien in besonderer Weise zur Herstellung von 3D-Kunststoffteilen, insbesondere solchen, die durch film insert molding-Verfahren erhalten werden. Die Oberflächen der Kunststoffteile weisen somit die besonderen Eigenschaften der erfindungsgemäßen Folien auf. Ein weiterer Gegenstand der vorliegenden Erfindung ist daher ein 3D-Kunststoffteil, umfassend die erfindungsgemäße beschichtete Polycarbonatfolie. In einer besonders bevorzugten Ausführungsform ist das 3D-Kunststoffteil gemäß der vorliegenden Erfindung erhältlich durch ein film insert molding-Verfahren. Solche Verfahren umfassen das Hinterspritzen, beispielsweise durch Spritzguss, der erfindungsgemäßen beschichteten Polycarbonat-Folien mit einem thermoplastischen Polymer, insbesondere mit Polycarbonat.

Daher ist ein weiterer Gegenstand der vorliegenden Erfindung die Verwendung der erfindungsgemäßen beschichteten Polycarbonat-Folie zur Herstellung von Kunststoffteilen in film insert molding-Verfahren. In einer besonders bevorzugten Ausführungsform umfasst die erfindungsgemäße Verwendung die Herstellung von Kunststoffteilen für die Auto-, Transport-, Elektro-, Elektronik- und Bauindustrie.

**Beispiele**

Bewertungsmethoden

Schichtdicke

Die Schichtdicke der Beschichtungen wurde durch Beobachtung der Schnittkante in einem optischem Mikroskop des Typs Axioplan des Herstellers Zeiss gemessen. Methode - Auflicht, Hellfeld, Vergrößerung 500x.

Bewertung der Blockfestigkeit

Zur Simulation der Blockfestigkeit von aufgerollten vorgetrockneten beschichteten Folien reichen klassische Prüfmethoden wie etwa in DIN 53150 beschrieben nicht aus, weshalb auf nachfolgende Prüfung zurückgegriffen wurde: Die Beschichtungsmaterialien wurden mit einer handelsüblichen Rakel (Sollnassschichtdicke 100 μm) auf Makrofol DE 1-1 (375 μm) aufgetragen. Nach einer Ablüftphase von 10 min bei 20 °C bis 25 °C wurde die beschichteten Folien für 10 min bei 110 °C in einem Umluftofen getrocknet. Nach einer Abkühlphase von 1 min wurde eine handelsübliche Haftkaschierfolie GH-X173 natur (Firma Bischof u. Klein, Lengerich, Deutschland) mit einer Kunststoffwalze auf eine Fläche von 100 mm x 100 mm faltenfrei auf der getrockneten beschichteten Folie aufgebracht. Anschließend wurde das kaschierte Folienstück flächig mit einem Gewicht von 10 kg für 1 Stunde belastet. Danach wurde die Kaschierfolie entfernt und die beschichtete Oberfläche visuell beurteilt.

Bewertung der Bleistifthärte

Die Bleistifthärte wurde analog ASTM D 3363 unter Verwendung eines Elcometer 3086 Scratch boy (Elcometer Instruments GmbH, Aalen, Deutschland) bei einer Belastung von 500 g, wenn nicht anders angegeben, gemessen.

Bewertung der Stahlwolle-Verkratzung

Die Stahlwolle-Verkratzung wurde bestimmt, indem eine Stahlwolle No. 00 (Oskar Weil GmbH Rakso, Lahr, Deutschland) auf das flächige Ende eines 500 g Schlosser-Hammers geklebt wurde, wobei die Fläche des Hammers 2,5 cm x 2,5 cm, d.h. ca. 6,25 cm$^2$ beträgt. Der Hammer wurde ohne zusätzlichen Druck auf die zu prüfende Fläche aufgesetzt, so dass eine definierte Belastung von ca. 560 g erreicht wurde. Der Hammer wurde dann 10mal in Doppelhüben vor und zurück bewegt. Nachfolgend wurde die belastete Oberfläche mit einem weichen Tuch von Gewebeückständen und Lackpartikeln gereinigt. Die Verkratzung wurde durch Haze- und Glanzwerte charakterisiert, gemessen quer zur Verkratzungsrichtung mit einem Micro HAZE plus (20°-Glanz und Haze; Byk-Gardner GmbH, Geretsried, Deutschland). Die Messung erfolgte vor und nach Verkratzung. Angegeben werden die Differenzwerte bei Glanz und Haze vor und nach Belastung als ΔGlanz und ΔHaze.

Bewertung der Lösemittelbeständigkeit

Die Lösemittelbeständigkeit der Beschichtungen wurde üblicherweise mit Isopropanol, Xylol, 1-Methoxy-2-propylacetat, Ethylacetat, Aceton in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch sauber gewischt. Die Abmusterung erfolgt sofort visuell und nach leichten Kratzen mit dem Fingernagel.

Folgende Stufen werden unterschieden:

- 0 = unverändert; keine Veränderung sichtbar; durch Kratzen nicht verletzbar.
- 1 = leichte Anquellung sichtbar, aber durch Kratzen nicht verletzbar.

- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennwerten 0 und 1 üblicherweise bestanden. Kennwerte > 1 stehen für ein "nicht bestanden".

Bewertung des Oiling-Effekts

Der "Oiling-Effekt" wird auch als "Newton Ring-Effekt" bezeichnet. Newton-Ringe treten als irreguläres Interferenzmuster an der Oberfläche beschichteter Teile auf, wenn diese in Reflexion unter weißem Licht betrachtet werden. Auf einer reflektierenden, glänzenden Oberfläche wird ein Lichtstrahl sowohl an der äußeren Oberfläche eines beschichteten Bauteils, wie auch an der darunter liegenden Oberfläche des beschichteten Substrats reflektiert. Tritt zwischen den beiden reflektierten Strahlen einer Wellenlänge ein Gangunterschied im Bereich $\lambda/2$ auf, so wird diese Wellenlänge durch Interferenz abgeschwächt oder sogar ausgelöscht und das ursprünglich eingestrahlte weiße Licht wird in Reflexion lokal farblich verändert. Diese Muster können auch als Oszillationen im Reflektionsspektrum beschichteter Oberflächen (hier beschichteter Folien) nachgewiesen werden. Die Intensität und die Frequenz dieser Oszillationen ist ein Maß für das Auftreten des Newton Ring-Effekts.

Die zur Bestimmung des Oiling-Effektes verwendeten Messwerte sind aus Transmissions- und Reflektionsspektren entnommen, die mit einem Spektrometer der Firma STEAG ETA-Optik, CD-Measurement System ETA-RT, aufgenommen wurden. Es wurde die direkte Reflektion unter einem Betrachtungswinkel von 0° gemessen.

Die Maßzahl für die Newton Ringe wurde aus den Reflektionsspektren wie folgt ermittelt:

mPV:     maximales Peak-Valley-Verhältnis in % im Bereich 400 - 650 nm.

mPV/2:   Amplitude der Oszillation in %

R:       Reflektion bei der zugehörigen Wellenlänge in %

$$\text{Newton Ringe} = \text{mPV}/2/R \cdot 1000$$

Die Wellenlängenbereiche unterhalb 400 nm und oberhalb 650 nm werden nicht betrachtet, da Farbkontraste in diesen Bereichen so gering sind, dass keine für das bloße Auge störenden Effekte sichtbar werden.

Beispiel 1: Herstellung eines Beschichtungsmittels

25 g Poly-(methacrylsäuremethylester) (Hersteller Aldrich, Katalog-Nr. 182265, $M_w$ 996000 (GPS, Angabe von Aldrich) wurden in 142 g 1-Methoxy-2-propanol bei 100 °C in ca. 5 h gelöst. Die Lösung wurde bis auf ca. 30 °C abgekühlt. Separat wurden in 83 g 1-Methoxy-2-propanol bei Raumtemperatur folgende Komponenten gelöst: 25 g Dipentaerythritpenta/hexaacrylat (DPHA, Hersteller Cytec), 2,0 g Irgacure 1000 (Hersteller BASF), 1,0 g Darocur 4265 (Hersteller BASF), 0,0625 g BYK 333 (Hersteller BYK). Diese zweite Lösung wurde der Polymerlösung unter Rühren zugegeben. Der Lack wurde noch 3 h bei Raumtemperatur und unter Abschirmung des direkten Lichteinflusses gerührt, abgefüllt und 1 Tag ruhen gelassen. Die Ausbeute betrug 270 g, die Viskosität (23 °C) 9060 mPas, der Feststoffgehalt 19 Gew.-% und die berechnete Doppelbindungsdichte im Feststoffanteil des Lackes ca. 5,1 mol/kg.

**Beispiel 2:** Herstellung eines Beschichtungsmittels

Beispiel 1 analog wurde aus Degalan M345 (PMMA; Hersteller Evonik; $M_w$ 180.000-Angabe von Evonik) ein Beschichtungsmittel hergestellt. Die Ausbeute betrug 275 g, der Feststoffgehalt 19 Gew.-% die berechnete Doppelbindungsdichte im Feststoffanteil des Lackes ca. 5,1 mol/kg.

**Beispiel 3 (nicht erfindungsgemäß):** Herstellung eines Beschichtungsmittels

Beispiel 1 analog wurde aus Degalan M825 (PMMA; Hersteller Evonik; $M_w$ 80.000-Angabe von Evonik) ein Beschichtungsmittel hergestellt. Die Ausbeute betrug 280 g, der Feststoffgehalt 19 Gew.-% die berechnete Doppelbindungsdichte im Feststoffanteil des Lackes ca. 5,1 mol/kg.

**Beispiel 4:** Beschichtung von Folien

Die Beschichtungsmittel gemäß den Beispielen 1 bis 3 wurden mittels eines Schlitzgießers des Herstellers TSE Troller AG auf eine Trägerfolie wie beispielsweise Makrofol DE 1-1 (Bayer MaterialScience AG, Leverkusen, Deutschland), aufgetragen. Die Schichtstärke der Trägerfolie betrug 250 μm.

Eine weitere Trägerfolie war eine PC/PMMA-coextrudierte Folie des Typs Makrofol® SR 253 (Bayer Material-Science AG, Leverkusen, Deutschland). Die gesamte Schichtstarke der Trägerfolie betrug 250 μm und die Stärke der PMMA-Schicht 15 μm. Das Beschichtungsmittel aus Beispiel 1 wurde mittels Schlitzgießer auf die PMMA-Seite der Trägerfolie aufgetragen.

Als dritte Trägerfolie wurde eine PC/PMMA-coextrudierte Folie des Hersteller MSK (Meihan Shinku Kogyo Co.Ltd, Japan) verwendet. Die gesamte Schichtstarke der Trägerfolie betrug 250 μm und die Stärke der PMMA-Schicht 56 μm. Das Beschichtungsmittel aus Beispiel 1 wurde mittels Schlitzgießer auf die PMMA-Seite der Trägerfolie aufgetragen.

Typische Antragsbedingungen waren dabei wie folgt:

- Bahngeschwindigkeit 1,3 bis 2,0 m/min
- Nasslackauftrag 20 - 150 μm
- Umlufttrockner 90 - 110 °C, bevorzugt im Bereich der TG des zu trocknenden Polymers.
- Verweilzeit im Trockner 3,5 - 5 min.

Die Beschichtung erfolgte Rolle auf Rolle, das heißt, dass die Polycarbonatfolie in der Beschichtungsanlage abgerollt wurde. Die Folie wurde durch eines der oben genannten Antragsaggregate geführt und mit der Beschichtungslösung beaufschlagt. Danach wurde die Folie mit der nassen Beschichtung durch den Trockner gefahren. Nach Ausgang aus dem Trockner wurde die jetzt trockene Beschichtung üblicherweise mit einer Kaschierfolie versehen, um diese vor Verschmutzung und Verkratzung zu schützen. Danach wurde die Folie wieder aufgerollt.

**Beispiel 5:** Überprüfung der Blockfestigkeit

Die beschichteten Seiten der in Beispiel 4 erzeugten nicht mit UV ausgehärteten Folien wurden mit einer Kaschierfolie vom Typ GH-X 173 A (Bischof + Klein, Lengerich, Deutschland) abgedeckt und 1 h bei ca. 23 °C mit einer Aluminiumplatte in den Maßen 4,5 x 4,5 cm$^2$ und einem Gewicht von 2 kg beaufschlagt. Danach wurden das Gewicht und die Kaschierfolie entfernt und die Oberfläche der Beschichtung visuell auf Veränderungen geprüft.

Die Versuche zeigten, dass die Blockfestigkeit der Beschichtungen (kein Abdruck auf der Folie) ab einem Molekulargewicht des Polymethylmethacrylats von 100.000 und mehr gegeben ist.

**Beispiel 6:** Formen der beschichteten Folien und Härten der Beschichtungen

Die HPF-Verformungsversuche wurden auf einer SAMK 360 - Anlage ausgeführt. Das Werkzeug wurde auf 100 °C elektrisch beheizt. Die Folienaufheizung wurde mittels IR Strahler bei 240, 260 und 280 °C vorgenommen. Die Heizzeit betrug 16 Sekunden. Es wurde eine Folientemperatur von ca. 170 °C erreicht. Die Verformung erfolgte bei einem Verformungsdruck von 100 bar. Das Verformungswerkzeug war eine HL-Blende.

Der entsprechende Folienbogen wurde auf einer Palette positionsgenau fixiert. Die Palette fuhr durch die Verformungsstation in die Heizzone und verweilte dort die eingestellte Zeit (16 s). Dabei wurde die Folie so aufgeheizt, dass die Folie kurzzeitig eine Temperatur oberhalb des Erweichungspunktes erfuhr, der Kern der Folie war ca. 10-20° C kälter. Dadurch war die Folie relativ stabil, wenn sie in die Verformungsstation eingefahren wird.

In der Verformungsstation wurde die Folie durch Zufahren des Werkzeuges über dem eigentlichen Werkzeug fixiert, gleichzeitig wurde mittels Gasdruck die Folie über das Werkzeug geformt. Die Druckhaltezeit von 7 s sorgte dafür, dass die Folie das Werkzeug passgenau abformte. Nach der Haltezeit wurde der Gasdruck wieder entlastet. Das Werkzeug öffnete sich und die umgeformte Folie wurde aus der Verformungsstation herausgefahren.

Die Folie wurde anschließend von der Palette entnommen und konnte nun mit UV-Licht ausgehärtet werden.

Mit dem verwendeten Werkzeug wurden Radien bis herunter auf 1 mm abgebildet.

Die UV-Härtung der erfindungsgemäßen Beschichtung wurde mit einer Quecksilberdampf-Hochdrucklampe vom Type evo 7 dr (ssr engineering GmbH, Lippstadt, Deutschland) ausgeführt. Diese Anlage ist ausgestattet mit dichroitischem Reflektoren und Quarzscheiben und hat eine spezifische Leistung von 160 W/cm. Es wurde eine UV-Dosis von 2,0 J/cm$^2$ und eine Intensität von 1,4 W/cm$^2$ appliziert. Die Oberflächentemperatur sollte > 60 °C erreichen.

Die Angaben zur UV-Dosis wurden mit einem Lightbug ILT 490 (International Light Technologies Inc., Peabody MA, USA) ermittelt. Die Angaben zur Oberflächentemperatur wurden mit Temperatur-Teststreifen der Marke RS (Bestellnummer 285-936; RS Components GmbH, Bad Hersfeld, Deutschland) ermittelt.

Ergebnisse zur Beständigkeit der Beschichtungen, die unter Verwendung der genannten Bedingungen vernetzt wurden sind Tabelle 1 zu entnehmen.

**Tabelle 1:** Chemikalien- und Kratzbeständigkeit der Beschichtungen

| Nr. | Lack | Dicke der oberen Beschichtung | Trägerfolie | Dicke der gesamten PMMA-haltigen Schichten | Lösemittel IP/MPA/X/EA/ Ac 1h/RT | Bleistifthärte 500 g Mitsubishi | Stahlwolle (Hersteller Rakso, No. 00) 560 g / 10 DH $\Delta$G / $\Delta$H |
|---|---|---|---|---|---|---|---|
| 1 | Beispiel 1 | 5$\mu$m | Makrofol DE 1-1 | 5$\mu$m | 0/0/0/0/0 | HB | 1/1 |
| 2 | Beispiel 1 | 7$\mu$m | Makrofol DE 1-1 | 7$\mu$m | 0/0/0/0/0 | HB | 3/5 |
| 3 | Beispiel 1 | 12$\mu$m | Makrofol DE 1-1 | 12$\mu$m | 0/0/0/0/0 | HB | 1/4 |
| 4 | Beispiel 1 | 17$\mu$m | Makrofol DE 1-1 | 17$\mu$m | 0/0/0/0/0 | H | 5/5 |
| 5 | Beispiel 1 | 25$\mu$m | Makrofol DE 1-1 | 25$\mu$m | 0/0/0/0/0 | H | 3/4 |
| 6 | Beispiel 1 | 4$\mu$m | Makrofol SR253 | 19$\mu$m | 0/0/0/0/0 | H | 3/5 |
| 7 | Beispiel 1 | 6$\mu$m | Makrofol SR253 | 21$\mu$m | 0/0/0/0/0 | 2H | 1/4 |
| 8 | Beispiel 1 | 5$\mu$m | PC/PMMA-Folie* | 61$\mu$m | 0/0/0/0/0 | 4H | 4/5 |
| 9 | unbeschichtet | - | Makrofol DE 1-1 | - | 0/5/5/5/5 | 3B | 100/285 |
| 10 | - | - | Makrofol SR253 | 15$\mu$m | 0/5/5/5/5 | H | 142/399 |
| 11 | - | - | PC/PMMA-Folie* | 56$\mu$m | 0/5/5/5/5 | 3H | 85/267 |
| * Hersteller MSK (JP) | | | | | | | |

Tabelle 1 zeigt, dass die erfindungsgemäße oberste Beschichtung mit dem erfindungsgemäßen Beschichtungsmittel zu einer deutlichen Verbesserung der Bleistifthärte und Kratzfestigkeit beiträgt. Die erfindungsgemäße Beschichtung führte zu sehr guten Lösemittelbeständigkeiten der Folien. Besonders zu vermerken ist die Lösemittelbeständigkeit der entwickelten Endbeschichtung gegen Aceton. Aceton, das aggressivste Lösemittel für Polycarbonat-Folien, hat auf die erfindungsgemäße Endbeschichtung auch bei einer Einwirkungszeit von 1 Stunde fast keine Wirkung (Kennwert $\leq 1$; Scoring 0 bis 5). Das bedeutet, dass die Lösemittelbeständigkeit für diese Beschichtung auf dem Niveau der besten (aber nicht verformbaren) *Hardcoats* liegt. Ohne die erfindungsgemäße obere Beschichtung zeigen PC/PMMA-Coextrusionsfolien, die zwar relativ hart sind, keine ausreichende Lösemittelbeständigkeit.

**Beispiel 7:** Bestimmung des Brechungsindexes der Beschichtung

Der Brechungsindex n in Abhängigkeit von der Wellenlänge der Proben wurde aus den Transmissions- und Reflexionsspektren erhalten. Dazu wurde ein ca. 300 nm dicker Film des Beschichtungsmittels aus Beispiel 1 auf Quarzglasträger aufgeschleudert. Das Transmissions- und Reflexionsspektrum dieses Schichtpaketes wurde mit einem Spektrometer "CD-Measurement System ETA-RT" des Herstellers AudioDev gemessen und danach die Schichtdicke und der spektrale Verlauf von n an die gemessenen Transmissions- und Reflexionsspektren im Bereich von 380 - 850 nm angepasst. Dieses geschah mit der internen Software des Spektrometers und erforderte zusätzlich die Brechungsindexdaten des Quarzglassubstrates, die in einer Blindmessung vorab bestimmt wurden. Die Brechungsindizes für die ausgehärteten Lacke beziehen sich auf die Wellenlänge von 589 nm und entsprechen damit $n_D^{20}$.

**Tabelle 2:** Brechungsindex

| Lack | $n_D^{20}$ der ausgehärteten Beschichtung |
|---|---|
| Beispiel 1 | 1,511 |

**Beispiel 8:** Bestimmung der Stärke des Regenbogeneffektes

Als Maß für den Regenbogeneffektes diente die aus Reflektionsspektren ermittelte Zahl der Newton-Ringe. Sie wurde aus der maximalen Amplitude im Reflektionsspektrum zwischen 400 nm und 650 nm errechnet. Reflektion (R) und maximale Amplitude (MA) wurden aus dem Spektrum in Prozent entnommen. Um die Einheit zu eliminieren wurde MA durch R bei derselben Wellenlänge dividiert. Um Nachkommastellen zu vermeiden, wurde der ermittelte Wert mit 1000 multipliziert.

**Tabelle 3:** Regenbogeneffekt/Newtonringe

| Nr. | Lack | Dicke der obere Lackierung | Trägerfolie | Dicke der gesamten PMMA-haltigen Schichten | Reflektion (R), % | Max. peak-valley-Wert (mPV) im Bereich 400 nm bis 650 nm | Zahl der Newton-Ringe, mPV/2000R |
|---|---|---|---|---|---|---|---|
| 1 | Beispiel 1 | 5 μm | Makrofol DE 1-1 | 5 μm | 8,7 | 1,3 | 74 |
| 2 | Beispiel 1 | 7 μm | Makrofol DE 1-1 | 7 μm | 8,9 | 0,7 | 38 |
| 3 | Beispiel 1 | 12 μm | Makrofol DE 1-1 | 12 μm | 8,9 | 0,1 | 7 |
| 4 | Beispiel 1 | 17 μm | Makrofol DE 1-1 | 17 μm | 8,9 | 0,1 | 6 |
| 5 | Beispiel 1 | 25 μm | Makrofol DE 1-1 | 25 μm | 9,0 | 0,1 | 4 |
| 6 | Beispiel 1 | 4 μm | Makrofol SR253 | 19 μm | 8,7 | 0,4 | 21 |
| 7 | Beispiel 1 | 6 μm | Makrofol SR253 | 21 μm | 8,9 | 0,2 | 12 |

(fortgesetzt)

| Nr. | Lack | Dicke der obere Lackierung | Trägerfolie | Dicke der gesamten PMMA-haltigen Schichten | Reflektion (R), % | Max. peak-valley-Wert (mPV) im Bereich 400 nm bis 650 nm | Zahl der Newton-Ringe, mPV/ 2000R |
|-----|------|-----|------|-----|-----|-----|-----|
| 8 | Beispiel 1 | 5 $\mu$m | PC/PMMA-Folie* | 61 $\mu$m | 9,2 | 0,3 | 14 |
| * Hersteller MSK (JP) | | | | | | | |

Die so ermittelten Werte lagen bei erfindungsgemäßen Beschichtungen der Nummern 3 bis 8 in Tabelle 3 um und unter 20, während die nicht erfindungsgemäßen Folien der Nummern 1 und 2 in Tabelle 3, deren Dicke der gesamten PMMA-haltigen Schichten unter 10 $\mu$m liegt, Werte ab 30 und auch weit darüber und damit ein offensichtliches Oiling zeigen.

Wie in den Beispielen klar gezeigt wurde, weisen die erfindungsgemäßen beschichteten Polycarbonat-Folien kratzfeste und lösemittelbeständige Oberflächen bei einem zumindest verringerten Oiling auf. Damit sind die erfindungsgemäßen Folien hervorragend geeignet zur Herstellung von Formkörpern aller Art, insbesondere durch film insert molding-Verfahren.

## Patentansprüche

1. Beschichtete Polycarbonat-Folie, umfassend eine Polycarbonatfolie und darauf mindestens eine Polymethylmethacrylat-haltige Schicht mit einem Polymethylmethacrylat-Anteil von mindestens 40 Gew.-%, **dadurch gekennzeichnet, dass**
   die gesamte Schichtdicke der mindestens einen Polymethylmethacrylat-haltigen Schicht mindestens 10 $\mu$m beträgt, die oberste Schicht der mindestens einen Polymethylmethacrylat-haltigen Schicht erhältlich ist durch Beschichtung mit einem Beschichtungsmittel, umfassend

   (a) mindestens ein Polymethylmethacrylat-Polymer oder Polymethylmethacrylat-Copolymer mit einem mittleren Molgewicht Mw, bestimmt durch Gelpermeationschromatographie, von mindestens 100.000 g/mol in einem Gehalt von mindestens 40 Gew.-% des Festanteils des Beschichtungsmittels;
   (b) mindestens einen UV-härtbaren Reaktivverdünner in einem Gehalt von mindestens 30 Gew.-% des Festanteils des Beschichtungsmittels;
   (c) mindestens einen Fotoinitiator in einem Gehalt von 0,1 bis 10 Gewichtsteilen des Festanteils des Beschichtungsmittels; und
   (d) mindestens ein organisches Lösungsmittel,
   wobei der Anteil an ethylenisch ungesättigten Gruppen mindestens 3 mol pro kg des Festanteils des Beschichtungsmittels beträgt.

2. Beschichtete Polycarbonat-Folie gemäß Anspruch 1, umfassend eine Polymethylmethacrylat-haltige Schicht.

3. Beschichtete Polycarbonat-Folie gemäß Anspruch 1, umfassend zwei Polymethylmethacrylat-haltige Schichten.

4. Beschichtete Polycarbonat-Folie gemäß Anspruch 3, umfassend eine mittels Coextrusion erhältliche Polycarbonat/Polymethylmethacrylat-Folie mit einer durch Beschichten mit dem Beschichtungsmittel erhältliche Beschichtung auf der Polymethylmethacrylat-Schicht der Folie.

5. Beschichtete Polycarbonat-Folie gemäß Anspruch 4, wobei die coextrudierte Polymethylmethacrylat-Schicht eine Dicke von mindestens 15 $\mu$m aufweist.

6. Beschichtete Polycarbonat-Folie gemäß mindestens einem der vorstehenden Ansprüche, wobei das Polymethylmethacrylat-Polymer oder Polymethylmethacrylat-Copolymer (a) eine Vicaterweichungstemperatur VET gemäß ISO 306 von mindestens 95 °C aufweist.

7. Beschichtete Polycarbonat-Folie gemäß mindestens einem der vorstehenden Ansprüche, wobei das Polymethylmethacrylat-Copolymer (a) aus 70 Gew.-% bis 99,5 Gew.-% Methylmethacrylat und 0,5 Gew.-% bis 30 Gew.-% Methylacrylat besteht.

8. Beschichtete Polycarbonat-Folie gemäß mindestens einem der vorstehenden Ansprüche, wobei der mindestens eine UV-härtbare Reaktivverdünner (b) bifunktionelle, trifunktionelle, tetrafunktionelle, pentafunktionelle und/oder hexafunktionelle Acryl- und/oder Methacrylmonomere umfasst.

9. Beschichtete Polycarbonat-Folie gemäß mindestens einem der vorstehenden Ansprüche, wobei das Lösungsmittel (d) ausgewählt ist aus 1-Methoxy-2-propanol, Diacetonalkohol, 2,2,3,3-Tetrafluoropropanol und Gemischen davon.

10. Beschichtete Polycarbonat-Folie gemäß mindestens einem der vorstehenden Ansprüche, wobei das Lösungsmittel (d) 1-Methoxy-2-propanol umfasst.

11. Verfahren zur Herstellung einer beschichteten Polycarbonatfolie, umfassend die Schritte

   (i) Beschichten einer Polycarbonatfolie oder einer coextrudierten Polycarbonat/Polymethylmethacrylatfolie mit einem Beschichtungsmittel, umfassend

      (a) mindestens ein Polymethylmethacrylat-Polymer oder Polymethylmethacrylat-Copolymer mit einem mittleren Molgewicht Mw, bestimmt durch Gelpermeationschromatographie, von mindestens 100.000 g/mol in einem Gehalt von mindestens 40 Gew.-% des Festanteils des Beschichtungsmittels;
      (b) mindestens einen UV-härtbaren Reaktivverdünner in einem Gehalt von mindestens 30 Gew.-% des Festanteils des Beschichtungsmittels;
      (c) mindestens einen Fotoinitiator in einem Gehalt von 0,1 bis 10 Gewichtsteilen des Festanteils des Beschichtungsmittels; und
      (d) mindestens ein organisches Lösungsmittel,

   wobei der Anteil an ethylenisch ungesättigten Gruppen mindestens 3 mol pro kg des Festanteils des Beschichtungsmittels beträgt;
   (ii) Trocknen der Beschichtung;
   (iii) gegebenenfalls zurechtschneiden, dekaschieren, bedrucken und/oder thermisches oder mechanisches Verformen der Folie;
   (iv) Bestrahlen der Beschichtung mit UV-Strahlung, dabei Härten der Beschichtung,

   wobei die Dicke der mindestens einen PMMA-haltigen Schicht nach dem Trocknungsschritt mindestens 10 $\mu$m beträgt.

12. 3D-Kunststoffteil, umfassend die beschichtete Polycarbonatfolie gemäß mindestens einem der Ansprüche 1 bis 10.

13. 3D-Kunststoffteil gemäß Anspruch 12, erhältlich durch ein film insert molding-Verfahren.

14. Verwendung der beschichteten Polycarbonat-Folie gemäß mindestens einem der Ansprüche 1 bis 10 zur Herstellung von Kunststoffteilen in film insert molding-Verfahren.

15. Verwendung gemäß Anspruch 14, wobei die Verwendung die Herstellung von Kunststoffteilen für die Auto-, Transport-, Elektro-, Elektronik- und Bauindustrie umfasst.

**Claims**

1. Coated polycarbonate film comprising a polycarbonate film beneath at least one polymethylmethacrylate-containing layer having a polymethylmethacrylate content of at least 40% by weight, **characterized in that**
the total layer thickness of the at least one polymethylmethacrylate-containing layer is at least 10 $\mu$m,
the uppermost layer of the at least one polymethylmethacrylate-containing layer is obtainable by coating with a coating composition comprising

   (a) at least one polymethylmethacrylate polymer or polymethylmethacrylate copolymer having a mean molar mass Mw, determined by gel permeation chromatography, of at least 100 000 g/mol in a content of at least 40% by weight of the solids content of the coating composition;

(b) at least one UV-curable reactive diluent in a content of at least 30% by weight of the solids content of the coating composition;

(c) at least one photoinitiator in a content of 0.1 to 10 parts by weight of the solids content of the coating composition; and

(d) at least one organic solvent,

where the proportion of ethylenically unsaturated groups is at least 3 mol per kg of the solids content of the coating composition.

2. Coated polycarbonate film according to Claim 1, comprising one polymethylmethacrylate-containing layer.

3. Coated polycarbonate film according to Claim 1, comprising two polymethylmethacrylate-containing layers.

4. Coated polycarbonate film according to Claim 3, comprising a polycarbonate/polymethylmethacrylate film having a coating obtainable by coating with a coating composition atop the polymethylmethacrylate layer of the film.

5. Coated polycarbonate film according to Claim 4, wherein the co-extruded polymethylmethacrylate layer has a thickness of at least 15 $\mu$m.

6. Coated polycarbonate film according to at least one of the preceding claims, wherein the polymethylmethacrylate polymer or polymethylmethacrylate copolymer (a) has a Vicat softening temperature VET to ISO 306 of at least 95°C.

7. Coated polycarbonate film according to at least one of the preceding claims, wherein the polymethylmethacrylate copolymer (a) consists of 70% by weight to 99.5% by weight of methyl methacrylate and 0.5% by weight to 30% by weight of methyl acrylate

8. Coated polycarbonate film according to at least one of the preceding claims, wherein the at least one UV-curable reactive diluent (b) comprises bifunctional, trifunctional, tetrafunctional, pentafunctional and/or hexafunctional acrylic and/or methacrylic monomers.

9. Coated polycarbonate film according to at least one of the preceding claims, wherein the solvent (d) is selected from 1-methoxy-2-propanol, diacetone alcohol, 2,2,3,3-tetrafluoropropanol and mixtures thereof.

10. Coated polycarbonate film according to at least one of the preceding claims, wherein the solvent (d) comprises 1-methoxy-2-propanol.

11. Process for producing a coated polycarbonate film comprising the steps of:

(i) coating a polycarbonate film or a co-extruded polycarbonate/polymethylmethacrylate film with a coating composition comprising

(a) at least one polymethylmethacrylate polymer or polymethylmethacrylate copolymer having a mean molar mass Mw, determined by gel permeation chromatography, of at least 100 000 g/mol in a content of at least 40% by weight of the solids content of the coating composition;

(b) at least one UV-curable reactive diluent in a content of at least 30% by weight of the solids content of the coating composition;

(c) at least one photoinitiator in a content of 0.1 to 10 parts by weight of the solids content of the coating composition; and

(d) at least one organic solvent, where the proportion of ethylenically unsaturated groups is at least 3 mol per kg of the solids content of the coating composition;

(ii) drying the coating;

(iii) optionally cutting the film to size and/or delaminating, printing and/or thermally or mechanically forming the film;

(iv) irradiating the coating with UV radiation to cure the coating,

where the thickness of the at least one PMMA-containing layer after the drying step is at least 10 $\mu$m.

**12.** 3D plastics moulding comprising the coated polycarbonate film according to at least one of Claims 1 to 10.

**13.** 3D plastics moulding according to Claim 12, obtainable by a film insert moulding process.

**14.** Use of the coated polycarbonate film according to at least one of Claims 1 to 10 for production of plastics parts in film insert moulding processes.

**15.** Use according to Claim 14, wherein the use comprises the production of plastics parts for the automotive, transport, electrical, electronics and construction industries.


**Revendications**

**1.** Feuille de polycarbonate revêtue, comprenant une feuille de polycarbonate et, sur celle-ci, au moins une couche contenant du poly(méthacrylate de méthyle) présentant une proportion de poly(méthacrylate de méthyle) d'au moins 40% en poids, **caractérisée en ce que**
l'épaisseur totale de couche de ladite au moins une couche contenant du poly(méthacrylate de méthyle) est d'au moins 10 $\mu$m,
la couche supérieure de ladite au moins une couche contenant du poly(méthacrylate de méthyle) peut être obtenue par revêtement par un agent de revêtement, comprenant

(a) au moins un polymère de poly(méthacrylate de méthyle) ou un copolymère de poly(méthacrylate de méthyle) présentant un poids moléculaire moyen Mw, déterminé par chromatographie par perméation de gel, d'au moins 100.000 g/mole en une teneur d'au moins 40% en poids des solides de l'agent de revêtement ;
(b) au moins un diluant réactif durcissable aux UV en une teneur d'au moins 30% en poids des solides de l'agent de revêtement ;
(c) au moins un photo-initiateur en une teneur de 0,1 jusqu'à 10 parties en poids des solides de l'agent de revêtement ; et
(d) au moins un solvant organique,
la proportion de groupes éthyléniquement insaturés s'élevant à au moins 3 moles par kg de solides de l'agent de revêtement.

**2.** Feuille de polycarbonate revêtue selon la revendication 1, comprenant une couche contenant du poly(méthacrylate de méthyle).

**3.** Feuille de polycarbonate revêtue selon la revendication 1, comprenant deux couches contenant du poly(méthacrylate de méthyle).

**4.** Feuille de polycarbonate revêtue selon la revendication 3, comprenant une feuille de polycarbonate/poly(méthacrylate de méthyle) pouvant être obtenue par coextrusion, pourvue d'un revêtement sur la couche de poly(méthacrylate de méthyle) de la feuille, pouvant être obtenu par revêtement par l'agent de revêtement.

**5.** Feuille de polycarbonate revêtue selon la revendication 4, la couche coextrudée de poly(méthacrylate de méthyle) présentant une épaisseur d'au moins 15 $\mu$m.

**6.** Feuille de polycarbonate revêtue selon au moins l'une quelconque des revendications précédentes, le polymère de poly(méthacrylate de méthyle) ou le copolymère de poly(méthacrylate de méthyle) (a) présentant une température de ramollissement Vicat (VST) selon la norme ISO 306 d'au moins 95°C.

**7.** Feuille de polycarbonate revêtue selon au moins l'une quelconque des revendications précédentes, le copolymère de poly(méthacrylate de méthyle) (a) étant constitué de 70% en poids jusqu'à 99,5% en poids de méthacrylate de méthyle et de 0,5% en poids jusqu'à 30% en poids d'acrylate de méthyle.

**8.** Feuille de polycarbonate revêtue selon au moins l'une quelconque des revendications précédentes, ledit au moins un diluant réactif durcissable aux UV (b) comprenant des monomères d'acryle et/ou de méthacryle bifonctionnels, trifonctionnels, tétrafonctionnels, pentafonctionnels et/ou hexafonctionnels.

**9.** Feuille de polycarbonate revêtue selon au moins l'une quelconque des revendications précédentes, le solvant (d) étant choisi parmi le 1-méthoxy-2-propanol, l'alcool diacétonique, le 2,2,3,3-tétrafluoropropanol et les mélanges correspondants.

**10.** Feuille de polycarbonate revêtue selon au moins l'une quelconque des revendications précédentes, le solvant (d) comprenant du 1-méthoxy-2-propanol.

**11.** Procédé de préparation d'une feuille de polycarbonate revêtue, comprenant les étapes de

(i) revêtement d'une feuille de polycarbonate ou d'une feuille de polycarbonate/poly(méthacrylate de méthyle) coextrudée, par un agent de revêtement, comprenant

(a) au moins un polymère de poly(méthacrylate de méthyle) ou un copolymère de poly(méthacrylate de méthyle) présentant un poids moléculaire moyen Mw, déterminé par chromatographie par perméation de gel, d'au moins 100.000 g/mole en une teneur d'au moins 40% en poids des solides de l'agent de revêtement ;
(b) au moins un diluant réactif durcissable aux UV en une teneur d'au moins 30% en poids des solides de l'agent de revêtement ;
(c) au moins un photo-initiateur en une teneur de 0,1 jusqu'à 10 parties en poids des solides de l'agent de revêtement ; et
(d) au moins un solvant organique,
la proportion de groupes éthyléniquement insaturés s'élevant à au moins 3 moles par kg de solides de l'agent de revêtement ;

(ii) séchage du revêtement ;
(iii) éventuellement rognage, délaminage, impression et/ou formage thermique ou mécanique de la feuille ;
(iv) irradiation du revêtement par un rayonnement UV et ainsi durcissement du revêtement,

l'épaisseur de ladite au moins une couche contenant du PMMA (poly(méthacrylate de méthyle)) après l'étape de séchage s'élevant à au moins 10 $\mu$m.

**12.** Élément en plastique en 3D (trois dimensions), comprenant la feuille de polycarbonate revêtue selon au moins l'une quelconque des revendications 1 à 10.

**13.** Élément en plastique en 3D selon la revendication 12, pouvant être obtenue selon un procédé de moulage par insert de film.

**14.** Utilisation de la feuille de polycarbonate revêtue selon au moins l'une quelconque des revendications 1 à 10 pour la fabrication d'éléments en plastique selon un procédé de moulage par insert de film.

**15.** Utilisation selon la revendication 14, l'utilisation comprenant la fabrication d'éléments en plastique destinés à l'industrie automobile, l'industrie des transports, l'industrie électrique, l'industrie électronique et l'industrie de la construction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005080484 A1
- US 5061558 A
- US 20090163614 A1
- EP 2113527 A1
- EP 0517044 A
- DE 1031512 B
- US 6228973 B
- WO 2008037364 A
- EP 1582549 A
- WO 2002026862 A

- WO 2005113639 A
- US 4185009 B
- DE 2500092 A
- DE 4240313 A
- DE 19943642 A
- US 5367044 B
- EP 1506249 A
- WO 2004082926 A1
- WO 0207947 A1


**In der Beschreibung aufgeführte Nicht-Patentliteratur**

- **PITTURE E VERNICI.** *European Coatings,* 2006, vol. 82 (9), 10-19
- **BECK ; ERICH.** Into the third dimension: three ways to apply UV coating technology to 3D-automotive objects. *European Coatings Journal,* 2006, vol. 4, 32, , 34, , 36, , 38-39
- **PETZOLDT ; JOACHIM ; COLOMA ; FERMIN.** New three-dimensionally formable hardcoat films. *JOT, Journal fuer Oberflaechentechnik,* 2010, vol. 50 (9
- **PETZOLDT et al.** Development of new generation hardcoated films for complex 3D-shaped FIM applications. *RadTech Asia 2011, Conference Proceedings*
- **B. H. F. MARK et al.** Encyclopedia of Polymer Science and Engineering. J. Wiley, 1989, vol. 10, 1

- Chemistry & Technology of UV & EB Formulation for Coatings. **INKS ; PAINTS.** Chemistry & Technology of UV & EB Formulation for Coatings, Inks & Paints. SITA Technology, 1991, vol. 2, 73-123, 123-135
- **H. SCHNELL.** Chemistry and Physics of Polycarbonates, Polymer Reviews. Interscience Publishers, 1964, vol. 9, 33
- Condensation Polymers by Interfacial and Solution Methods. Polymer Reviews. Interscience Publishers, 1965, vol. 10, 325
- Polycarbonate. **DRES. U. GRIGO ; K. KIRCHER ; P. R- MÜLLER.** Kunststoff-Handbuch. Carl Hanser Verlag, 1992, vol. 3/1, 118-145
- *Encyclopedia of Polymer Science,* 1969, vol. 10
- Chemistry and Physics of Polycarbonates. **H. SCHNELL.** Polymer Reviews. John Wiley and Sons, Inc, 1964, vol. 9